# EUROPEAN PATENT APPLICATION

(11) **EP 4 843 695 A1**
(43) Date of publication of application: **25.11.2026**
(21) Application number: 26180392.8
(22) Date of filing: 21.05.2026
(51) Int. Cl.: B23K 9/32, B23K 9/28, B23Q 3/00

(54) **SYSTEMS AND METHODS FOR QUICK CHANGE OF WELDING-TYPE EQUIPMENT**

(30) Priority: 23.05.2025 US 202563810940 P; 14.05.2026 US 202619677134
(71) Applicant: Illinois Tool Works Inc., Glenview IL 60025 (US)
(72) Inventor: CHRISTOPHER, Mark, Glenview 60025 (US); PAULI, Kent, Glenview 60025 (US); SCHMITZ, Adam, Glenview 60025 (US)
(74) Representative: HGF

(57) **Abstract**

Systems and methods are provided for quick change of welding-type equipment (e.g., wire feeder, wire drive, etc.). An example welding-type system may include an mounting device configured for facilitating mounting of welding-type equipment onto a mounting platform. The mounting device is configured for securely engaging the mounting platform. Further, the mounting device is configured for engaging the welding-type equipment such that the welding-type equipment can be mounted onto or removed from the mounting platform. The mounting device may include a locking component configured for locking the welding-type equipment in place once mounted, an engaging structure configured to engage a corresponding structure in the welding-type equipment, and one or more aligning structures configured for aligning the welding-type equipment during mounting and removing of the welding-type equipment.

## Description

### CLAIM OF PRIORITY

This patent application claims priority to and claims benefit from United States Provisional Patent Application Serial No. 63/810,940, filed on May 23, 2025. The above identified application is hereby incorporated herein by reference in its entirety.

### BACKGROUND

Welding has become increasingly ubiquitous. Welding may be performed in a manual manner (e.g., being performed by a human), or at least some aspects of it may be performed in an automated manner. Equipment or components used during welding operations may be driven using engines. For example, engines may be used to drive, for example, generators, power sources, etc. used during welding operations.

In some instances, conventional welding-type systems may have some limitations and/or disadvantages. For example, welding-type systems may have limitations with respect to handling installation and changing of welding-type components and equipment.

Further limitations and disadvantages of conventional approaches will become apparent to one skilled in the art, through comparison of such approaches with some aspects of the present systems and methods set forth in the remainder of this disclosure with reference to the drawings.

### BRIEF SUMMARY

Aspects of the present disclosure relate to welding solutions. More specifically, various implementations in accordance with the present disclosure are directed to systems and methods for quick change of welding-type equipment, substantially as illustrated by or described in connection with at least one of the figures, and as set forth more completely in the claims.

These and other advantages, aspects and novel features of the present disclosure, as well as details of an illustrated implementation thereof, will be more fully understood from the following description and drawings.

### BRIEF DESCRIPTION OF THE DRAWINGS

Fig. 1 shows an example welding-type setup.
Figs. 2A-2B illustrate an example welding-type setup 200 incorporating mounting components for quick mounting and removing of welding-type equipment.
Fig. 3 illustrates an example mounting configuration that uses track based design.
Figs. 4A-4B illustrate an example mounting configuration that uses bosses-and-slots based design.
Figs. 5A-5B illustrate an example mounting configuration that uses a combination of track and bosses-and-slots based design.
Figs. 6A-6B illustrate an example cart-based mounting configuration.

### DETAILED DESCRIPTION

As utilized herein, the terms "circuits" and "circuitry" refer to physical electronic components (e.g., hardware), and any software and/or firmware ("code") that may configure the hardware, be executed by the hardware, and/or otherwise be associated with the hardware. As used herein, for example, a particular processor and memory (e.g., a volatile or non-volatile memory device, a general computer-readable medium, etc.) may comprise a first "circuit" when executing a first one or more lines of code and may comprise a second "circuit" when executing a second one or more lines of code. Additionally, a circuit may comprise analog and/or digital circuitry. Such circuitry may operate, for example, on analog and/or digital signals. It should be understood that a circuit may be in a single device or chip, on a single motherboard, in a single chassis, in a plurality of enclosures at a single geographical location, in a plurality of enclosures distributed over a plurality of geographical locations, etc. Similarly, the term "module" may, for example, refer to a physical electronic components (e.g., hardware) and any software and/or firmware ("code") that may configure the hardware, be executed by the hardware, and/or otherwise be associated with the hardware.

As utilized herein, circuitry or module is "operable" to perform a function whenever the circuitry or module comprises the necessary hardware and code (if any is necessary) to perform the function, regardless of whether performance of the function is disabled or not (e.g., by a user-configurable setting, factory trim, etc.).

As utilized herein, "and/or" means any one or more of the items in the list joined by "and/or". As an example, "x and/or y" means any element of the three-element set {(x), (y), (x, y)}. In other words, "x and/or y" means "one or both of x and y." As another example, "x, y, and/or z" means any element of the seven-element set {(x), (y), (z), (x, y), (x, z), (y, z), (x, y, z)}. In other words, "x, y and/or z" means "one or more of x, y, and z." As utilized herein, the term "exemplary" means serving as a non-limiting example, instance, or illustration. As utilized herein, the terms "for example" and "e.g." set off lists of one or more non-limiting examples, instances, or illustrations.

Welding-type power, as used herein, refers to power suitable for welding, plasma cutting, induction heating, CAC-A (carbon arc cutting/air) and/or hot wire welding/preheating (including laser welding and laser cladding). Welding-type power supply, as used herein, refers to a power supply that can provide welding-type power. A welding-type power supply may include power generation components (e.g., engines, generators, etc.) and/or power conversion circuitry to convert primary power (e.g., engine-driven power generation, mains power, etc.) to welding-type power.

Welding-type operations, as used herein, comprise operations in accordance with any known welding technique, including flame welding techniques such as oxy-fuel welding, electric welding techniques such as shielded metal arc welding (e.g., stick welding), metal inert gas welding (MIG), tungsten inert gas welding (TIG), resistance welding, as well as gouging (e.g., carbon arc gouging), cutting (e.g., plasma cutting), brazing, induction heating, soldering, and/or the like.

Welding-type setup, as used herein, refers to any setup comprising welding related devices or equipment (e.g., welding power sources, welding torch, welding gear such as headwear and the like, auxiliary devices or systems, etc.) which are used in facilitating and/or in conjunction with welding-type operations.

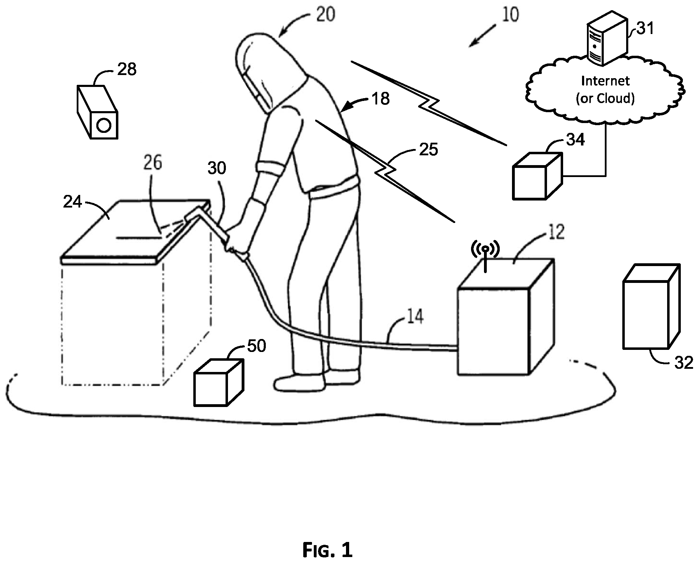

Fig. 1 shows an example welding-type setup. Referring to Fig. 1, there is shown an example welding-type setup 10 in which an operator (user) 18 is wearing welding headwear 20 and welding a workpiece 24 using a torch 30 to which power is delivered by equipment 12 via a conduit 14, with weld monitoring equipment 28, which may be available for use in monitoring welding operations.

The equipment 12 may comprise a power source, optionally a source of a shield gas and, where wire/filler material is to be provided automatically, a wire feeder. Further, in some instances an engine 32 may be used to drive equipment or components used during welding operations. The engine 32 may comprise a gas engine or a liquefied petroleum (LP) engine. The engine 32 may drive generators, power sources, etc. used during welding operations.

The welding-type setup 10 of Fig. 1 may be configured to form a weld joint by any known welding-type technique. For example, optionally in any implementation, the welding equipment 12 may be arc welding equipment that provides a direct current (DC) or alternating current (AC) to a consumable or non-consumable electrode of a torch 30. The electrode delivers the current to the point of welding on the workpiece 24. In the welding-type setup 10, the operator 18 controls the location and operation of the electrode by manipulating the torch 30 and triggering the starting and stopping of the current flow. In other implementations, a robot or automated fixture may control the position of the electrode and/or may send operating parameters or trigger commands to the welding system. When current is flowing, an arc 26 is developed between the electrode and the workpiece 24. The conduit 14 and the electrode thus deliver current and voltage sufficient to create the electric arc 26 between the electrode and the workpiece. The arc 26 locally melts the workpiece 24 and welding wire or rod supplied to the weld joint (the electrode in the case of a consumable electrode or a separate wire or rod in the case of a non-consumable electrode) at the point of welding between electrode and the workpiece 24, thereby forming a weld joint when the metal cools.

Optionally in any implementation, the weld monitoring equipment 28 may be used to monitor welding operations. The weld monitoring equipment 28 may be used to monitor various aspects of welding operations, particularly in real-time (that is as welding is taking place). For example, the weld monitoring equipment 28 may be operable to monitor arc characteristics such as length, current, voltage, frequency, variation, and instability. Data obtained from the weld monitoring may be used (e.g., by the operator 18 and/or by an automated quality control system) to ensure proper welding.

As shown, the equipment 12 and headwear 20 may communicate via a link 25 via which the headwear 20 may control settings of the equipment 12 and/or the equipment 12 may provide information about its settings to the headwear 20. Although a wireless link is shown, the link may be wireless, wired, or optical.

Optionally in any implementation, equipment or components used during welding operations may be driven using engines. For example, the engine 32 may drive generators, power sources, etc. used during welding operations. In some instances, it may be desired to obtain information relating to used engines. For example, data relating to engines (and operations thereof) used during welding operations may be collected and used (e.g., based on analysis thereof) in monitoring and optimizing operations of these engines. The collection and use of such data may be performed telematically-that is, the data may be collected locally, subjected to at least some processing locally (e.g., formatting, etc.), and then may be communicated to remote management entities (e.g., centralized management locations, engine providers, etc.), using wireless technologies (e.g., cellular, satellite, etc.).

Optionally in any implementation, a dedicated controller (e.g., shown as element 34 in Fig. 1) may be used to control, centralize, and/or optimize data handling operations. The controller 34 may comprise suitable circuitry, hardware, software, or any combination thereof for use in performing various aspects of the engine related data handling operations. For example, the controller 34 may be operable to interface with the engine 32 to obtain data related thereto. The controller 34 may track or obtain welding related data (e.g., from weld monitoring equipment 28, from equipment 12, etc.). The controller 34 may then transmit the data (e.g., both engine related and weld related data), such as to facilitate remote monitoring and/or management, by way of wireless communications. This may be done using cellular and or satellite telematics hardware, for example.

Optionally in any implementation, welding-type systems or setups may incorporate a main transformer. The main transformer may be configured to convert an input voltage from a power source into output voltage that is suitable for use within the welding-type system or setup. In this regard, the main transform typically may be used to convert high-voltage input from the power source into low-voltage (but higher current) output required for welding. Main transformers are typically used in conjunction with AC welding-type systems or setups. Nonetheless, in some instances, Main transformers may be configured to enable operation in conjunction with DC welding-type systems or setups. In such cases, the main transformers may incorporate suitable components (e.g., rectifiers) to enable converting AC input into DC output. In various implementations the main transformer may comprise two main coils (or windings), primary and secondary coils, which may be configured to utilize electromagnetic induction to enable adjusting voltage (and current) levels to facilitate delivering the required voltage and/or current needed for welding operations. As shown in Fig. 1, the welding-type setup 10 comprises a main transformer 50, which may be configured to operate as described herein.

Solutions based on the present disclosure are directed to improving and optimizing operation of welding-type setups or systems (e.g., the welding-type setup 10), particularly with respect to aspects relating to installation and changing welding-type equipment in such welding-type setups or systems. In this regard, in many instances there may be a need to install, remove, and/or swap welding-type equipment to in welding-type setups or systems. Such changes may be time consuming and burdensome, and as such reducing the time it takes to make such changes and/or increase the ease of making such changes may result in improved performance. In this regard, in various welding use environments, welding-type equipment may be mounted, and as such there exists a need to lock and/or release welding-type equipment from each other, and preferably to do so quickly.

For example, in the automation industry down-time to replace weld equipment from a robot is very costly, as production capacity is lost while the welding-type equipment is replaced. As such, reducing amount of time it takes to make such changes would improve productivity. Similar considerations may apply to non-automated setups. In this regard, in other applications it may be advantageous to have particular welding-type equipment mounted or locked on a structure (e.g., a bench, cart, or other piece of equipment), and as such being able to quickly remove the welding-type equipment (e.g., release the lock) may be similarly desirable. This can allow the weld equipment to be quickly moved to another location where it can stand freely or be locked to another piece of equipment.

Accordingly, in various embodiments based on the present disclosure, welding-type setups may be configured such that welding-type equipment may be installed, removed, and/or swapped quicker and easier compared to conventional solutions, if any existed. In particular, in various example embodiments an optimized mounting configuration is used, with the mounting configuration comprising at least two elements, the first element being a welding-type equipment (e.g., wire feeder or the like) and the second element being a mounting device or component that is configured for engaging a mounting platform (e.g., a robotic arm, a bench, a cart, etc.) to which the welding-type equipment needs to be mounted. The mounting device is configured for expediated and easy mounting and removing of the welding-type equipment, without compromising (and even improving) safety and/or quality of mounting.

To that end, various features may be used to ensure and improve upon such safe and secure mounting. These may include aligning features for ensuring proper and convenient aligning of the different elements during mounting as well as ease of action during removing, to facilitate quick installation and changing of the welding-type equipment. Further, a locking mechanism (e.g., a spring activated element) may be used. The locking mechanism may be mounted or incorporated to mounting device. The aligning and mounting features of the mounting device, along with the locking mechanism, may be combined to provide a quick and simple slide and lock for the two elements (and thus the welding-type equipment and the mounting platform). Example embodiments, and features and/or attributes associated therewith, are described in more detail below.

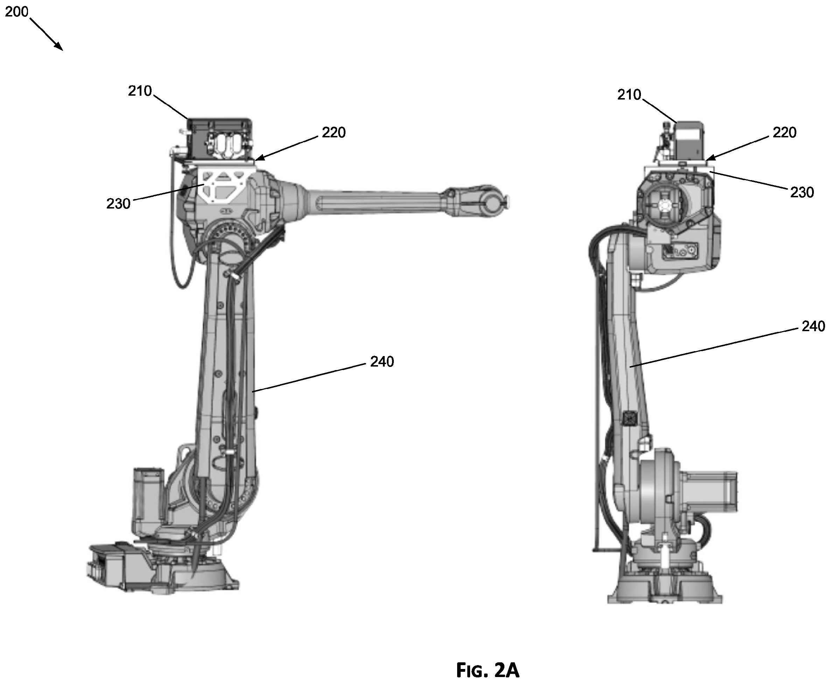

Figs. 2A-2B illustrate an example welding-type setup 200 incorporating mounting components for quick mounting and removing of welding-type equipment. Shown in Figs. 2A-2B is an example automated welding-type setup 200 (or portion thereof). In this regard, an automated based welding-type setup, such as the welding-type setup 200, may be robotic based, with at least some of the welding-type components are mounted on and/or operated using industrial robotic systems.

For example, as illustrated in Figs. 2A-2B, the welding-type setup 200 comprises a robotic arm (or simply "robot") 240, on which welding-type components and/or equipment may be mounted to enable automated welding operations. The welding-type components and/or equipment may comprise a welding-type torch (not shown) and a welding-type wire feeder 210.

In accordance with the present disclosure, the welding-type setup 200 may be configured for quick changing of welding-type equipment, such as the welding-type wire feeder 210. In this regard, the welding-type setup 200 may incorporate components and/or features for facilitating such quick changing as described in herein. For example, the welding-type setup 200 may incorporate a mounting device 220, which may be configured for facilitating quick mounting and changing of welding-type equipment, such as the welding-type wire feeder 210, on the robot 240. The mounting device 220 may be implemented such that it may be used to facilitate the quick mounting of the wire feeder 210 on the robot 240, while also enabling quick mounting and changing (if necessary), and to do so a manner that ensure secure mounting and removing of the wire feeder 210.

In this regard, the mounting device 220 may be designed and/or implemented to facilitate such quick mounting and changing. In this regard, the mounting device 220 may incorporate various features and/or structures that allow for quick aligning and moving of the welding-type equipment during installation on and/or removing from the robot 240. For example, the mounting device 220 may use bosses-and-cutouts (or track) based design, bosses-and-slots based design, a combination of bosses-and-cutouts and bosses-and-slots based design. Examples of such designs are described in more detail below. Nonetheless, the disclosure is not limited to the designs described herein, and a person of ordinary skill in the art would appreciate that any suitable design may be used.

Further, the mounting device 220 is configured for securely engaging the mounting platform (e.g., the robot 240 in the welding-type setup 200), to facilitate the quick mounting and removing functions provided thereby. For example, in some instances a dedicated add-on component may be used to ensure secure engagement between the mounting 220 and the mounting platform (e.g., the robot 240). For example, as shown in Figs. 2A-2B, a mounting adapter 230 (e.g., bracket) is used, being adaptively configured for facilitating engaging the robot 240. In this regard, the mounting adapter 230 is adaptively configured for facilitating engaging the mounting platform based on a type and/or a shape of the mounting platform.

For example, as illustrated in Figs. 2A-2B, the bracket 230 is shaped to match a part of the robot 240 where the mounting device 220 may be installed (e.g., top of the lower arm of the robot 240), as shown. Once the mounting adapter 230 is installed on the mounting platform, the mounting device 220 may be installed onto the mounting adapter 230. In this regard, any suitable means of installation may be used. For example, both of the installation of the mounting adapter 230 onto the robot 240, and the installation of the mounting device 220 onto the mounting adapter 230 may be done by use of screws, bolts, or similar mechanical components.

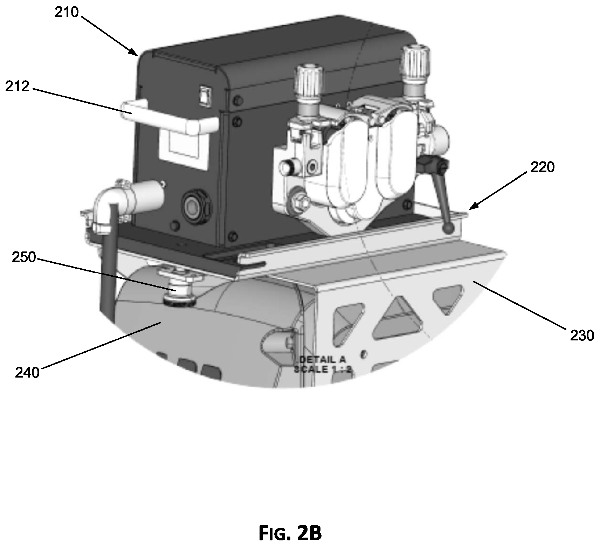

In some instances, one or both of the mounting device (e.g., the mounting device 220) and the welding-type equipment (e.g., welding-type wire feeder 210) may comprise components that use in facilitating and assisting handling during installation and/or removing. For example, as shown in Fig. 2, the welding-type wire feeder 210 comprises a handle 212 that the user may use when installing and/or removing the welding-type wire feeder 210. The handle 212 may be already existing component or may be added specifically for utilizing the mounting solutions described herein.

To further enhance performance, particularly with respect to overall safety (e.g., protect against unintended moving of the welding-type equipment once installed), a locking mechanism may be used. The locking mechanism may be configured to allow for locking the welding-type equipment in place once fulling installed, and would protect against inadvertent removing by ensuring that the welding-type equipment can only be removed once the locking mechanism is engaged (and disabled). As noted, the locking mechanism may be mounted and/or incorporated into mounting device, but the disclosure is not so limited. For example, as shown in Figs. 2A-2B, the mounting device 220 incorporates a locking component 250. In this regard, the locking component 250 may comprise a spring activated mechanism (e.g., spring opposed cylinder or other locking feature (locking element), with a knob or a grip like feature), which extends a protruded part (e.g., part of the locking element) into a corresponding receiving feature once the welding-type equipment (e.g., the wire feeder 210 in the welding-type setup 200) is fully installed onto the mounting device 220.

Accordingly, the combination of the aligning and mounting features of the mounting device 220 (based on the particular design used), along with locking and unlocking provided the locking component 250, may together provide a quick and simple slide and locking-in-place of the welding-type equipment, thus allowing for quick installation and removing as described herein.

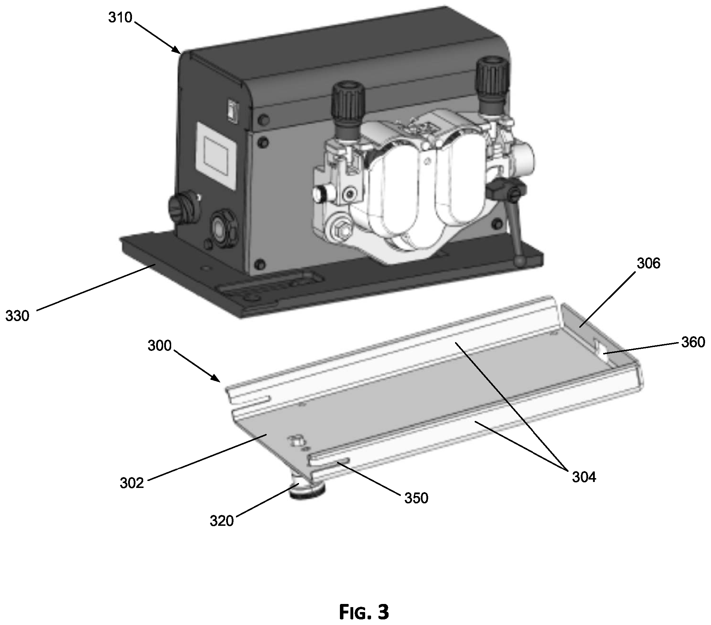

Fig. 3 illustrates an example mounting configuration that uses track based design. Shown in Fig. 3 are mounting device 300 and wire feeder 310. The mounting device 300 may correspond to the mounting device 220 of Figs. 2A-2B, and may be used and/or operated in substantially similar manner.

In this regard, the mounting device 300 represents an example embodiment based on one possible design-namely, bosses-and-cutouts based design, that allows for track-like operation. In particular, one or both of the mounting device 300 and the wire feeder 310 may incorporate features and/or structures configured for facilitating the mounting and removing of the wire feeder 310, particularly by use of track-like movement.

The bosses-and-cutouts based design has at least two elements: Element 1 (e.g., the mounting device 300) and Element 2 (e.g., the wire feeder 310), and (optionally) a locking element (e.g., a locking component 320). In this regard, the locking component 320 is fixed relative to one of the two elements. The locking component 320 may be similar to the locking component 250 of Figs. 2A-2B, and as such may similarly use spring loaded based mechanism as described above. The bosses-and-cutouts based design uses a combination of features on one or both of the two elements to provide track-like structures, to enable moving (e.g., sliding) of the welding-type equipment in and/or out, thus facilitating the installation and removing thereof, with the locking component 320 being used to lock the welding-type equipment in-place once installed (e.g., fully inserted).

For example, the mounting device 300 (Element 1) may incorporate various structures and/or features that give it a u-shape cross-section or a tray-like shape, comprising flat base section 302, providing a flat plane, and two side walls 304 extending in the same direction. The mounting device 300 may further comprise a back wall 306 extending in the same direction as the side walls 304. Correspondingly, the wire feeder 310 (Element 2) is adaptively configured to engage the mounting device 300 (Element 1), particularly based on the structures and/or features incorporated into the mounting device 300, to facilitate the mounting of the wire feeder 310. For example, the wire feeder 310 comprises or is otherwise coupled to a mounting base 330 that is configured to engage the mounting device 300, and particularly the structures and/or features incorporated into the mounting device 300, to enable the mounting and removing of the wire feeder 310.

For example, the width of the mounting base 330 may match (roughly) the distance between the side walls 304, and the side walls 304 may additionally incorporate track-like features (e.g., cutouts sections, as shown in Fig. 3) that match the side walls of the mounting base 330, and as such the mounting base 330 may move within the "track" created by the side walls 304. In particular, as noted the mounting device 300 comprises a flat plane (the base section 302), and as such the mounting base 330 is configured (e.g., shape, size, dimensions, etc.) to enabling laying the wire feeder 310 on the flat plane. Further, the mounting base 330 may incorporate features (e.g., bosses) having shape and/or dimension that ensure they can be trapped laterally (dimension 1) by the side walls 304 of the mounting device 300 and vertically (dimension 2) by slot, holes or cutouts 350 in the side walls 304 of the mounting device 300 (Element 1).

The mounting base 330 may be part of the welding-type equipment, or may be a separate, add-on component that is selectively attachable to the welding-type equipment (e.g., when needed), such as using suitable securing means (e.g., bolts, screws, and the like).

In an example implementation, one or both of the two elements (the mounting device 300 and the wire feeder 310) may be incorporate additional features to prevent over insertion of the welding-type equipment-e.g., with the additional featured added on fixed element to stop the movable element if it moves past the locking position. For example, as shown in Fig. 3, the back wall 306 of the mounting device 300 prevents the wire feeder 310 from being inserted beyond the locking position. Further, for added support, the back wall 306 may incorporate a back cutout section 360, into which a corresponding protrusion (not shown) of the mounting base 330 may extend, to ensure alignment while also preventing over-insertion.

The locking component 320 may be used be used to securely lock the wire feeder 310 in place, once fully inserted. In this regard, the mounting base 330 may incorporate a locking receiving feature, configured for engaging the locking component 320 when the wire feeder 310 is mounted (fulling inserted). For example, in instances where the locking component 320 comprises a retractable spring plunger, the locking receiving feature may comprise a hole having dimensions that allow for secure extension of the plunger part. Alternatively, the locking component 320 may be configured such that it may operate without requiring direct action by the user-e.g., the use does not need to pull the knob. For example, the locking component 320 may be configured such that the weight of the wire feeder 310 (Element 2) compresses the spring in the locking component 320 (whose stiffness is made light enough) that it will allow the weight of the wire feeder 310 (Element 2) to compress the locking feature on the locking component 320 flush with the mounting surface of the mounting device 300 (Element 1). The wire feeder 310 (Element 2) then may be slid into position without having to pull the locking feature back manually. This may allow the lock to occur automatically as soon as the locking component 320 and locking features align.

With respect to releasing the locking, a force may be applied to the knob (grip) to retract cylinder or other locking feature, with the applied force opposing the force applied by the locking component 320 (e.g., the spring thereof) once engaged-e.g., the locking feature extended into the corresponding lock receiving feature. Applying such releasing force removes the interference between the cylinder or locking feature and the locked-in-place wire feeder 310 (Element 2), thus allowing the two elements to be moved out of interference with each other.

In example operation, during installing, the knob on the locking component 320 is pulled back to retract the locking feature. During this time, the sides of the wire feeder 310 (Element 2) are visually aligned with the with the inside of the side walls of the mounting device 300 (Element 1) below it. Also the locking bosses on the wire feeder 310 (Element 2) are visually aligned so they are behind the projection of the mounting device 300 (Element 1). After visual alignment occurs. The wire feeder 310 (Element 2) is then set on the mounting device 300 (Element 1). Next, the wire feeder 310 (Element 2) may be slid so that the bosses on the wire feeder 310 (Element 2) are locked in the vertical dimension by the cutouts on the mounting device 300 (Element 1), and the sides of the wire feeder 310 (Element 2) are locked in the lateral dimension by the wire feeder 310 (Element 2). Lastly a lock receiving feature (e.g., matching hole) in the wire feeder 310 (Element 2) is aligned with the locking feature on the locking component 320, and the locking component 320 is released. Accordingly, all these design related features and structures (and the locking provided by the locking component 320) allow for locking the two elements together in three dimensions.

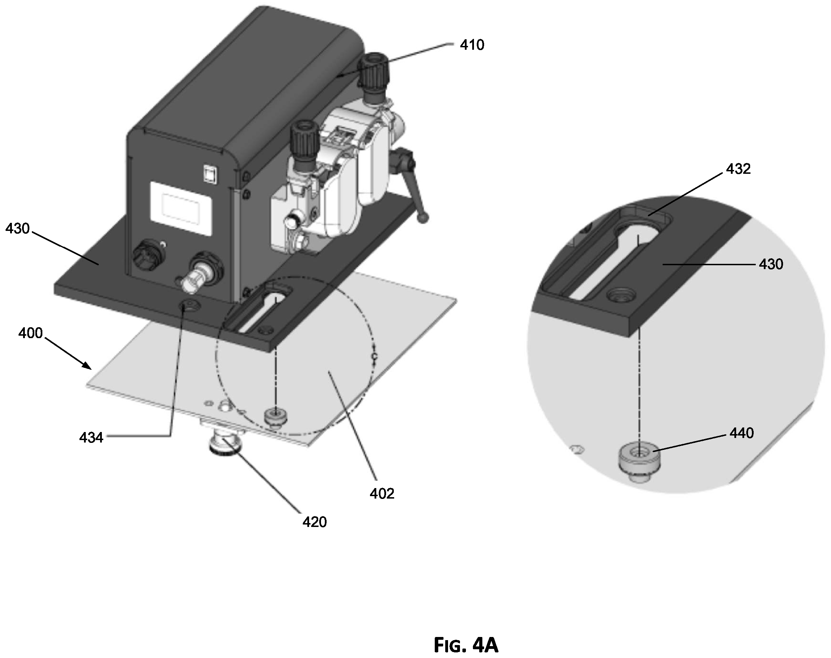

Figs. 4A-4B illustrate an example mounting configuration that uses bosses-and-slots based design. Shown in Figs. 4A-4B are mounting device 400 and wire feeder 410. The mounting device 400 may correspond to the mounting device 220 of Figs. 2A-2B, and may be used and/or operated in substantially similar manner.

In this regard, the mounting device 400 represents an example embodiment based on another possible design-namely, bosses-and-slots based design. In particular, both of the mounting device 400 and the wire feeder 410 may incorporate engaging and aligning features that include extensions (bosses) on one element and corresponding slots on the other element, with these features being configured for engaging each other in a manner that facilitate the mounting and removing of the wire feeder 410.

The bosses-and-slots based design has at least two elements: Element 1 (e.g., the mounting device 400) and Element 2 (e.g., the wire feeder 410), and (optionally) a locking element (e.g., a locking component 420). In this regard, the locking component 420 is fixed relative to one of the two elements. The locking component 420 may be similar to the locking component 320 of Fig. 3, and as such may similarly use spring loaded based mechanism as described above. The bosses-and-slots based design uses a combination of features on one or both of the two elements to provide track-like structures, to enable engaging, moving (e.g., sliding), and securing-in-place the welding-type equipment in and/or out, thus facilitating the installation and removing thereof, with the locking component 420 optionally used to further lock the welding-type equipment in-place once installed (e.g., fully inserted).

For example, the mounting device 400 (Element 1) may comprise a flat base section 402, providing a flat plane, with one or more engaging structures 440 disposed on the top surface of the flat plane. In this regard, as shown in Figs. 4A-4B, the engaging structures 440 may comprise bosses with undercut sections (e.g., button-like structures). Nonetheless, the disclosure is not limited to such structures, and any bosses with under. Correspondingly, the wire feeder 410 (Element 2) is adaptively configured to engage the mounting device 400 (Element 1), particularly based on the structures and/or features incorporated into the mounting device 400, to facilitate the mounting of the wire feeder 410. For example, the wire feeder 410 comprises or is otherwise coupled to a mounting base 430 that is configured to engage the mounting device 400, and particularly the structures and/or features incorporated into the mounting device 400, to enable the mounting and removing of the wire feeder 410.

For example, as noted the mounting device 400 comprises a flat plane (the base section 402), and as such the mounting base 430 is configured (e.g., similarly flat shaped) to enabling laying the wire feeder 410 on the flat plane. Further, the mounting base 430 may incorporate aligning features 432 adaptively configured to engage the corresponding engaging structures in the mounting device 440. For example, where the engaging structures 440 may comprise bosses with undercut sections (e.g., button-like structures), the aligning features 432 may comprise slots (e.g., keyhole-shaped slots as shown in Figs. 4A-4B) that are adaptively configured (e.g., shape, size, dimensions, etc.) to engage the button-like structures. In this regard, the keyhole slots may be biased to the back, for added safety-e.g., preventing accidental movement of the equipment, by forcing the user to move it up and away from the tray when removing the equipment.

The mounting base 430, similar to the mounting base 330, may be part of the welding-type equipment, or may be a separate, add-on component that is selectively attachable to the welding-type equipment (e.g., when needed), such as using suitable securing means (e.g., bolts, screws, and the like).

The locking component 420 may be used be used to securely lock the wire feeder 410 in place, once fully inserted. In this regard, the mounting base 430 may incorporate a locking receiving feature 434, configured for engaging the locking component 420 when the wire feeder 410 is mounted (fulling inserted). For example, in instances where the locking component 420 comprises a retractable spring plunger, the locking receiving feature 434may comprise a hole having dimensions that allow for secure extension of the plunger part.

In various example implementations, multiple pairs of engaging features and engaging structures may be used, to ensure alignment, and/or to improve safety and accuracy of mounting. For example, as shown in the example implementation illustrated in Figs. 4A-4B, two pairs of button-like structures 440 and corresponding keyhole slots 432 slots are used.

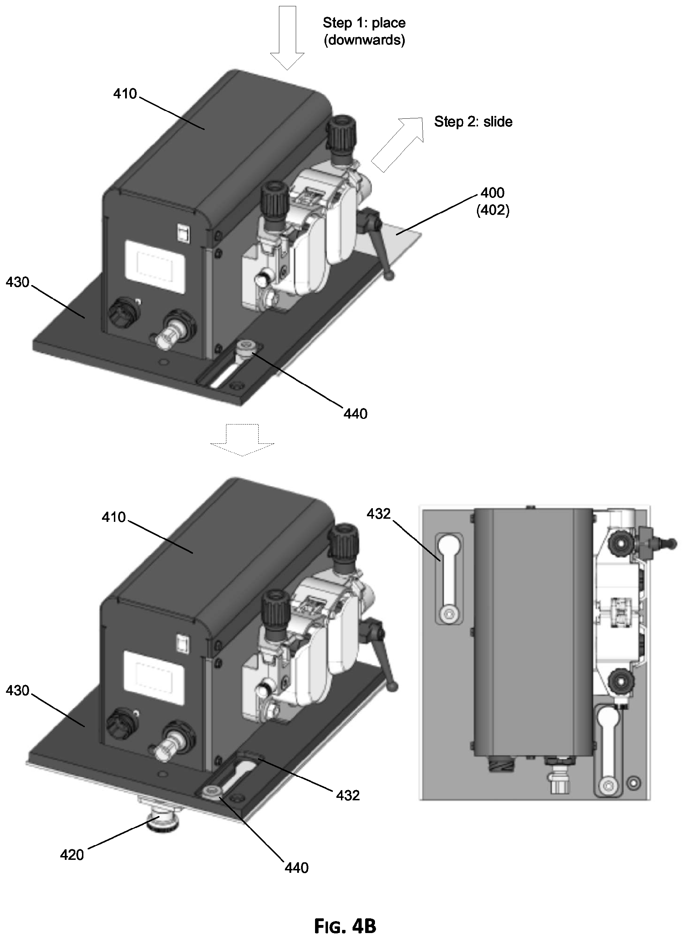

In example operation, In example operation (as shown in Fig. 4B), during step 1 of the installing, the large hole in each keyhole slot 432 of the wire feeder 410 (Element 2) is centered and moved to align concentrically with the corresponding button-like structure 440 on the mounting device 400 (Element 1), and the wire feeder 410 (Element 2) is then lowered onto the mounting device 400 (Element 1). Then in step 2, with the button-like structure(s) 440 Of the mounting device 400 (Element 1) now approximately centered in the large hole(s) of the corresponding keyhole slot(s) 432, the wire feeder 410 (Element 2) is slid, moving in the same direction as the long narrow section(s) in the keyhole slot(s) 432.

During this time the locking component 420 may be engaged-e.g., the spring lock is pulled back to retract. When the lock receiving feature 434 in the wire feeder 410 (Element 2) is aligned with the locking feature of the locking component 420, the locking element is released. Alternatively, no physical action by the user may be needed; rather, the weight of the wire feeder 410 (Element 2) may be used to compress the spring in the locking element (whose stiffness is made light enough), thus allowing the weight of the wire feeder 410 (Element 2) to compress the locking feature on the locking element flush with the top surface of the mounting device 400 (Element 1). As such, the wire feeder 410 (Element 2) may be slid into position without having to pull the locking feature back manually. This also allows the lock to occur automatically as soon As the locking element and locking features align.

With respect to releasing the locking, a force may be applied to the knob (grip) to retract cylinder or other locking feature, with the applied force opposing the force applied by the locking component 420 (e.g., the spring thereof) once engaged-e.g., the locking feature extended into the corresponding lock receiving feature. Applying such releasing force removes the interference between the cylinder or locking feature and mating second element-that is, the locked-in-place wire feeder 410 (Element 2)-thus allowing the two elements to be moved out of interference with each other.

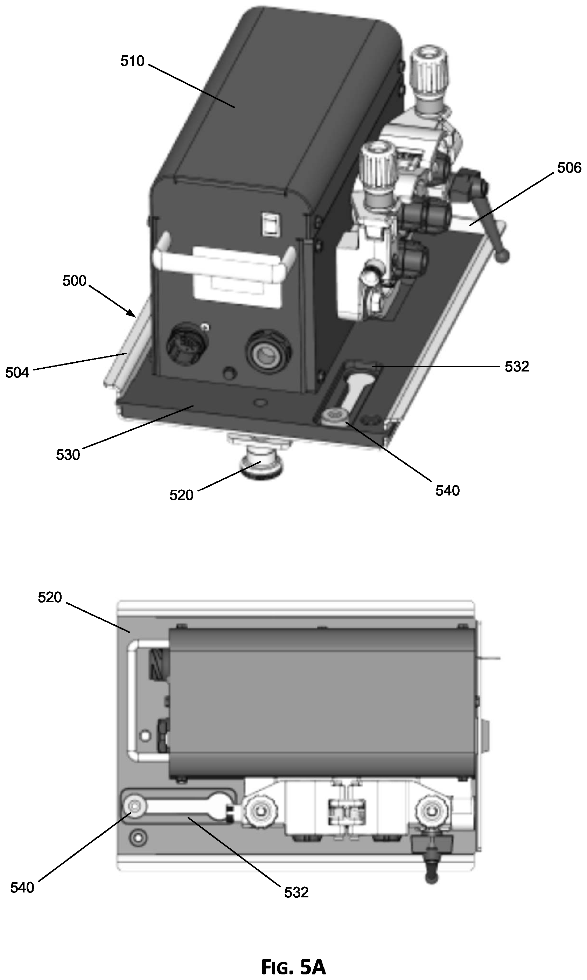

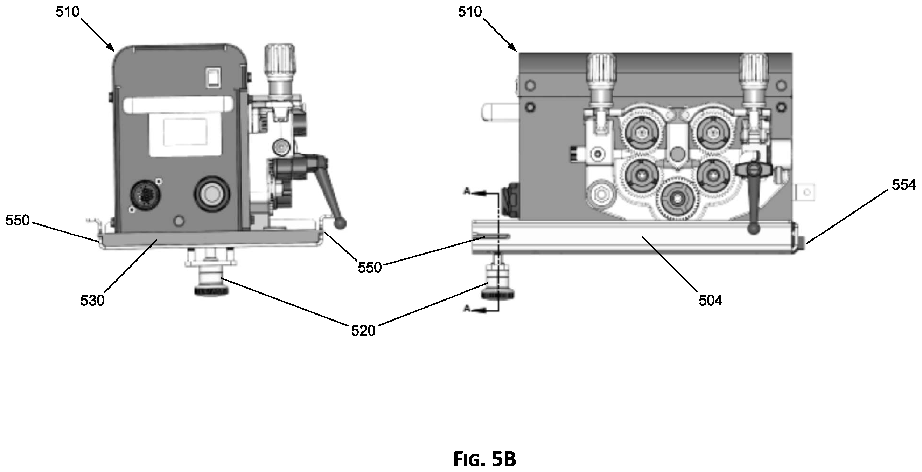

Figs. 5A-5B illustrate an example mounting configuration that uses a combination of track and bosses-and-slots based design. Shown in Figs. 5A-5B are mounting device 500 and wire feeder 510. The mounting device 500 may correspond to the mounting device 220 of Figs. 2A-2B, and may be used and/or operated in substantially similar manner.

In this regard, the mounting device 500 represents an example embodiment based on another possible design-namely, a design that combines features from both of the bosses-and-cutouts based design (e.g., as similar to the one illustrated and described with respect to Fig. 3) and the bosses-and-slots based design (e.g., as similar to the one illustrated and described with respect to Figs. 4A-4B). For example, as shown in Figs. 5A-5B, the mounting device 500 (Element 1) may be substantially similar to the mounting device 300, thus similarly having u-shape cross-section and/or a tray-like shape, and similarly comprising flat base section 502 (providing flat plane), two side walls 504 incorporating aligning features 350 (e.g., slot, holes or cutouts 350), and a back wall 506 incorporating a back cutout section (not shown), which may be configured and/or may be utilized in the same manner as the similarly-named features of the mounting device 300.

Similarly, the wire feeder 510 may comprise or may be otherwise coupled to a mounting base 530 that is substantially similar to the mounting base 330, thus being similarly configured to engage the mounting device 500, and particularly the structures and/or features incorporated into the mounting device 500, to enable the mounting and removing of the wire feeder 510. In this regard, the mounting base 530 may also be configured (e.g., shape, size, dimensions, etc.) to enabling laying the wire feeder 510 on the flat plane. Further, the mounting base 530 may incorporate features that ensure the mounting base 530 is trapped laterally by the side walls 504 of the mounting device 500 and vertically by the aligning features 550 in the side walls 504 of the mounting device 500.

However, the mounting device 500 and the wire feeder 510 (and in particular, the mounting base 530) may also incorporate bosses-and-slots based features. For example, as shown in Figs. 5A-5B, the mounting device 500 comprises a an engaging structure 540 and the mounting base 530 comprises a corresponding aligning feature 532, that are substantially similar to the engaging structures 440 and the corresponding aligning features 432 as described with respect to Figs. 4A-4B. As such, the engaging structure 540 may be a button-like structure, and the aligning features 532 may be a matching keyhole slot, as shown.

In addition, a locking component 520 may also be used, being substantially similar to, and operating in substantially similar manner as the locking component 320 of Fig. 3 and/or the locking component 420 of Figs. 4A-4B.

The combination of features of both designs may allow for further improvement in performance with respect to the ease and quickness of installing and removing welding-type equipment, as well as with respect to safety during such operations. In this regard, additional features on the moving element may be trapped by the corresponding added feature (e.g., the cutout or other added features) of the fixed element, thus further enhancing alignment and ease of use. Further, the use of the bosses-and-slots based features may add an extra measure of safety by ensuring that the moving element (e.g., the welding-type equipment) is lifted off of the fixed element. This forces the user removing the removable element to lift the removable element vertically before the center of gravity of the removable element can slide past the end of the fixed element. Such constraints may help guards against inadvertent or careless removing of the welding-type equipment, especially under certain use conditions (e.g., overhead removal).

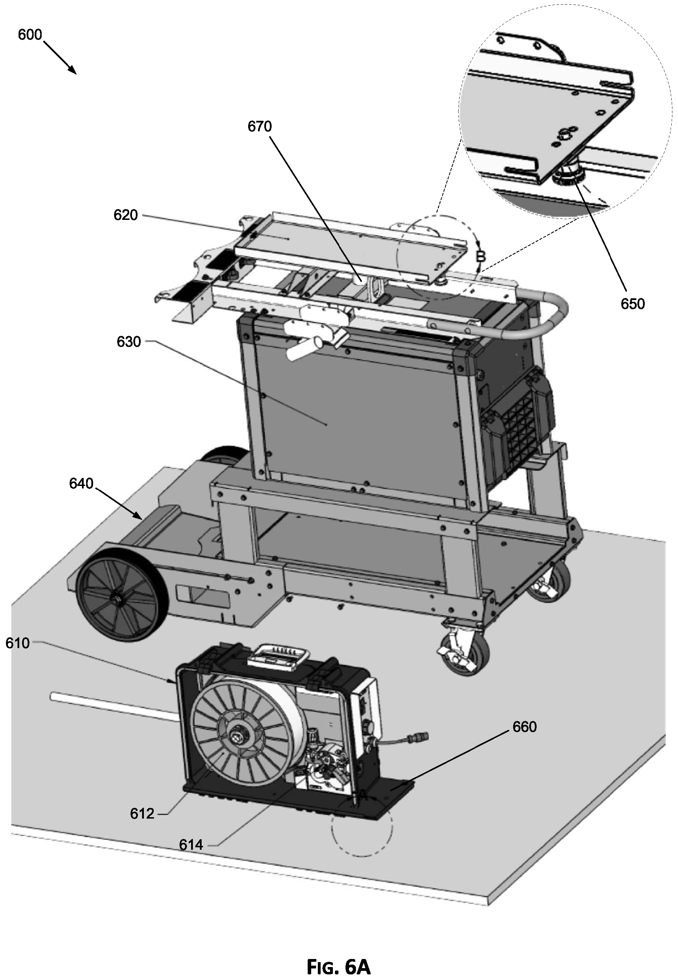

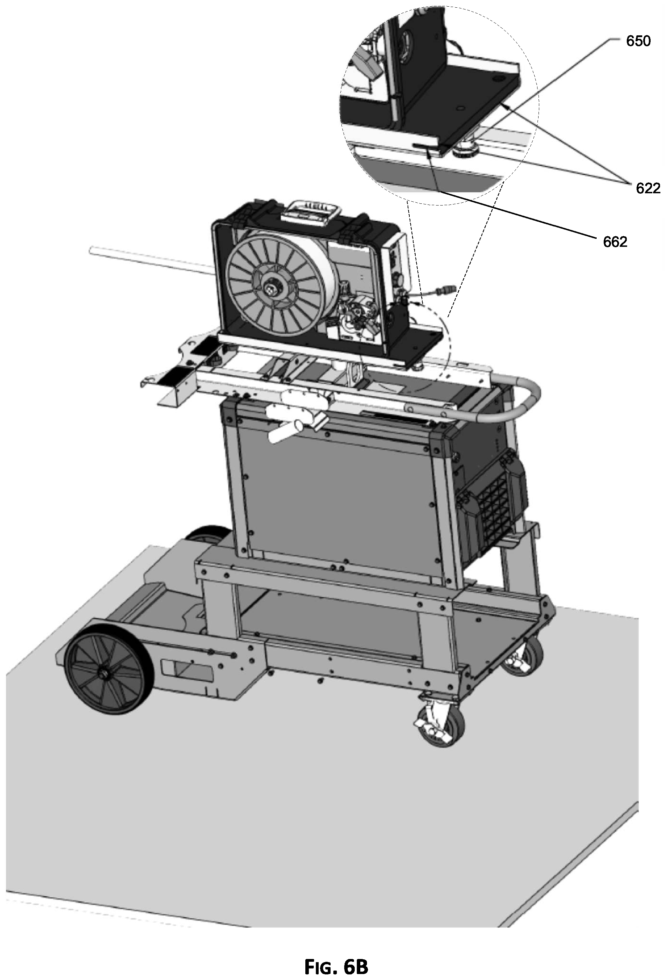

Figs. 6A-6B illustrate an example cart-based mounting configuration. Shown in Figs. 6A-6B is an example welding-type setup 600 (or portion thereof). In this regard, the welding-type setup 600, may be cart based setup, with at least some of the welding-type components are mounted on and/or operated using industrial cart 640 (e.g., a mobile cart with lockable wheels, as shown).

For example, as illustrated in Figs. 6A-6B, certain welding-type components and/or equipment may be mounted on the cart 640 during welding operations. The welding-type components and/or equipment may comprise a welding-type wire feeder 610 and a welding-type power supply 630. The wire feeder 610 may comprise a wire spool 612 and a wire drive 614.

In accordance with the present disclosure, the welding-type setup 600 may be configured for quick changing of welding-type equipment, such as the welding-type wire feeder 610. In this regard, the welding-type setup 600 may incorporate components and/or features for facilitating such quick changing as described in herein. For example, the welding-type setup 600 may incorporate a mounting device 620, which may be configured for facilitating quick mounting and changing of welding-type equipment, such as the welding-type wire feeder 610, on the cart 640. In this regard, in an example use case illustrated in Figs. 6A-6B, the welding-type power supply 630 may be first secured onto the cart 640, and then the mounting device 620 is mounted onto the welding-type power supply 630. Then the welding-type wire feeder 610 may be installed on the mounting device 620, and subsequently, if necessary, removed or changed therefrom, as described herein. Alternatively, the mounting device 620 may be secured directly onto the cart 640, with the welding-type power supply 630 mounted separately on the cart 640 or left out altogether. Further, while not shown clearly in Figs. 6A-6B, in some instances a mounting adapter may be used (if necessary) to enable mounting and securing the mounting device onto the cart 640.

The mounting device 620, similar to other mounting devices described herein, may be implemented such that it may be used to facilitate the quick mounting of the wire feeder 610 on the cart 640, while also enabling quick mounting and changing (if necessary), and to do so a manner that ensure secure mounting and removing of the wire feeder 610.

In this regard, the mounting device 620 may incorporate various features and/or structures, such as in accordance with one or more particular designs, to allow for quick installing (e.g., aligning, engaging, and moving) of welding-type equipment during installation on and/or removing from the cart 640. For example, the mounting device 620 may use a bosses-and-cutouts (or track) based design (e.g., as described with respect to Fig. 3), bosses-and-slots based design (e.g., as described with respect to Figs. 4A-4B), or a combination of bosses-and-cutouts and bosses-and-slots based design (e.g., as described with respect to Figs. 5A-5B).

For example, as shown in Figs. 6A-6B, the welding-type setup 600 may utilize bosses-and-cutouts (or track) based design. In this regard, as implemented, the bosses-and-cutouts based design has at least two elements: Element 1 (e.g., the mounting device 620) and Element 2 (e.g., the wire feeder 610), and (optionally) a locking element (e.g., a locking component 650). In this regard, the locking component 650 is fixed relative to one of the two elements. The locking component 650 may be similar to the locking component 250 of Figs. 2A-2B, and as such may similarly use spring loaded based mechanism as described above. The bosses-and-cutouts based design uses a combination of features on one or both of the two elements to provide structures that allow for track-like operation when installing (inserting) and removing welding-type equipment, with the locking component 650 being used to lock the welding-type equipment in-place once installed (e.g., fully inserted).

The mounting device 620 (Element 1) may incorporate various structures and/or features that give it a u-shape cross-section or a tray-like shape. For example, the mounting device 620 (Element 1) may have a flat plane base section and two side walls extending in the same direction. The mounting device 620 may further comprise a back wall extending in the same direction as the side walls.

Correspondingly, the wire feeder 610 (Element 2) is adaptively configured to engage the mounting device 620 (Element 1), particularly based on the structures and/or features incorporated into the mounting device 620, to facilitate the mounting of the wire feeder 610. The wire feeder 610 comprises or is otherwise coupled to a mounting base 660 that is configured to engage the mounting device 620, and particularly the structures and/or features incorporated into the mounting device 620, to enable the mounting and removing of the wire feeder 610. In this regard, the width of the mounting base 660 may match (roughly) the distance between the side walls, and the side walls may additionally incorporate track-like features 662 (e.g., cutouts sections, as shown in Figs. 6A-6B) that match the side walls of the mounting base 660, and as such the mounting base 660 may move within the "track" created by the side walls. In particular, as noted the mounting device 620 comprises a flat plane, and as such the mounting base 660 is configured (e.g., shape, size, dimensions, etc.) to enabling laying the wire feeder 610 on the flat plane. Further, the mounting base 660 may incorporate features (e.g., bosses) having shape and/or dimensions that ensure they can be trapped laterally (dimension 1) by the side walls of the mounting device 620 and vertically (dimension 2) by slots, holes or cutouts 622 in the side walls of the mounting device 620 (Element 1).

The mounting base 660 may be part of the welding-type equipment, or may be a separate, add-on component that is selectively attachable to the welding-type equipment (e.g., when needed), such as using suitable securing means (e.g., bolts, screws, and the like).

In an example implementation, one or both of the two elements (the mounting device 620 and the wire feeder 610) may incorporate additional features to prevent over insertion of the welding-type equipment-e.g., with the additional featured added on fixed element to stop the movable element if it moves past the locking position. For example, as shown in Figs. 6A-6B, the back wall of the mounting device 620 prevents the wire feeder 610 from being inserted beyond the locking position. Further, for added support, the back wall may incorporate a back cutout section, into which a corresponding protrusion (not shown) of the mounting base 660 may extend, to ensure alignment while also preventing over-insertion.

The locking component 650 may be used be used to securely lock the wire feeder 610 in place, once fully inserted. In this regard, the mounting base 660 may incorporate a locking receiving feature, configured for engaging the locking component 650 when the wire feeder 610 is mounted (fulling inserted). For example, in instances where the locking component 650 comprises a retractable spring plunger, the locking receiving feature may comprise a hole having dimensions that allow for secure extension of the plunger part. Alternatively, the locking component 650 may be configured such that it may operate without requiring direct action by the user-e.g., the use does not need to pull the knob. For example, the locking component 650 may be configured such that the weight of the wire feeder 610 (Element 2) compresses the spring in the locking component 650 (whose stiffness is made light enough) that it will allow the weight of the wire feeder 610 (Element 2) to compress the locking feature on the locking component 650 flush with the mounting surface of the mounting device 620 (Element 1). The wire feeder 610 (Element 2) then may be slid into position without having to pull the locking feature back manually. This may allow the lock to occur automatically as soon as the locking component 650 and locking features align.

With respect to releasing the locking, a force may be applied to the knob (grip) to retract cylinder or other locking feature, with the applied force opposing the force applied by the locking component 650 (e.g., the spring thereof) once engaged-e.g., the locking feature extended into the corresponding lock receiving feature. Applying such releasing force removes the interference between the cylinder or locking feature and the locked-in-place wire feeder 610 (Element 2), thus allowing the two elements to be moved out of interference with each other.

In example operation, during installing, the knob on the locking component 650 is pulled back to retract the locking feature. During this time, the sides of the wire feeder 610 (Element 2) are visually aligned with the with the inside of the side walls of the mounting device 620 (Element 1) below it. Also the locking bosses on the wire feeder 610 (Element 2) are visually aligned so they are behind the projection of the mounting device 620 (Element 1). After visual alignment occurs. The wire feeder 610 (Element 2) is then set on the mounting device 620 (Element 1). Next, the wire feeder 610 (Element 2) may be slid so that the bosses on the wire feeder 610 (Element 2) are locked in the vertical dimension by the cutouts on the mounting device 620 (Element 1), and the sides of the wire feeder 610 (Element 2) are locked in the lateral dimension by the wire feeder 610 (Element 2). Lastly a lock receiving feature (e.g., matching hole) in the wire feeder 610 (Element 2) is aligned with the locking feature on the locking component 650, and the locking component 650 is released. Accordingly, all these design related features and structures (and the locking provided by the locking component 650) allow for locking the two elements together in three dimensions.

In some instances, mounting devices (e.g., the mounting device 620) may be configured to enable some controlled movement of the mounted and locked-in-place welding-type equipment. For example, the mounting device 620 may allow some measure of rotational movement of the mounted wire feeder 610. This may be desirable to accommodate and/or allow the user to move around without requiring constant moving of the cart. Various techniques or mechanisms may be used to allow such movement. For example, the mounting device 620 may comprise or otherwise engage a moving adapter 670 which may be configured for facilitating moving the mounting device 620 (and thus the mounted and locked-in-place wire feeder 610) in one or more directions while remaining securely engaged to the cart 640. The moving adapter 670 may comprise a swiveling or spinning mechanism configured for facilitating rotating of the mounting device 620 (and thus the mounted and locked-in-place wire feeder 610) while attached to the cart 640.

An example welding-type system, in accordance with the present disclosure, comprises: an mounting device configured for facilitating mounting of welding-type equipment onto a mounting platform, wherein: the mounting device is configured for securely engaging the mounting platform; and the mounting device is configured for engaging the welding-type equipment such that the welding-type equipment can be mounted onto or removed from the mounting platform; wherein the mounting device comprises: a locking component configured for locking the welding-type equipment in place once mounted; an engaging structure configured to engage a corresponding structure in the welding-type equipment; and one or more aligning structures configured for aligning the welding-type equipment during mounting and removing of the welding-type equipment. The various features in the mounting arrangement-e.g., features and structures in one or both of the mounting device and the welding-type equipment, may be configured to improve safety by ensuring stopping and deliberate actions when removing the welding-type equipment (e.g., requiring moving the welding-type equipment in particular manner during removing of the welding-type equipment).

In an example embodiment, the engaging structure comprises a tray-like bracket comprising a flat surface configured to engage a corresponding flat structure in the welding-type equipment.

In an example embodiment, the corresponding flat structure in the welding-type equipment comprises a flat base.

In an example embodiment, the flat structure is a separate component that is selectively attachable to the welding-type equipment. For example, the flat structure (e.g., flat base) may be an add-on part that can be added (e.g., attached, such as using bolts, screws, etc.) to the welding-type equipment when needed (e.g., when using the mounting device).

In an example embodiment, the one or more aligning structures comprise at least one boss structure with an undercut, wherein the boss structure is configured for engaging a corresponding aligning feature disposed in the welding-type equipment or in a component that engages the welding-type equipment.

In an example embodiment, the at least one boss structure with an undercut comprises a button-like structure.

In an example embodiment, the corresponding aligning feature comprises a slot.

In an example embodiment, the slot comprises a keyhole-shaped slot. The keyhole-shaped slot may be biased to the back (for added safety), thus forcing the user to move the welding-type equipment up and away from the mobile device during removing of the welding-type equipment, thus prevent accidental movement of the equipment.

In an example embodiment, the one or more aligning structures comprise one or more track structures configured for facilitating track-like movement of the weld-type equipment during mounting and removing of the weld-type equipment.

In an example embodiment, the one or more track structures comprise bosses-on-base trapping vertical extensions connected to a flat base of the mounting device.

In an example embodiment, the locking component comprises a retractable spring plunger.

In an example embodiment, the welding-type equipment comprises a locking receiving feature configured for engaging the locking component when the welding-type equipment is mounted.

In an example embodiment, the welding-type equipment comprises a welding-type wire drive and/or a welding-type wire feeder.

In an example embodiment, the welding-type equipment comprises a handling component configured for enabling handling the welding-type equipment during mounting and/or removing of the welding-type equipment.

In an example embodiment, the mounting platform comprises a robotic device configured for mounting and moving the welding-type equipment during welding operations.

In an example embodiment, the mounting platform comprises a cart.

In an example embodiment, the mounting platform comprises a different welding-type equipment.

In an example embodiment, the mounting device further comprises a mounting adapter configured for facilitating engaging the mounting platform.

In an example embodiment, the mounting adapter comprises a bracket adaptively configured for facilitating engaging the mounting platform based on a type and/or a shape of the mounting platform.

In an example embodiment, the mounting device further comprises a moving adapter configured for facilitating moving the mounting device in one or more directions while remaining securely engaged to the mounting platform.

In an example embodiment, the moving adapter comprises a swiveling or spinning mechanism configured for facilitating rotating of the mounting device while attached to the mounting platform.

Other implementations in accordance with the present disclosure may provide a non-transitory computer readable medium and/or storage medium, and/or a non-transitory machine readable medium and/or storage medium, having stored thereon, a machine code and/or a computer program having at least one code section executable by a machine and/or a computer, thereby causing the machine and/or computer to perform the processes as described herein.

Accordingly, various implementations in accordance with the present disclosure may be realized in hardware, software, or a combination of hardware and software. The present disclosure may be realized in a centralized fashion in at least one computing system, or in a distributed fashion where different elements are spread across several interconnected computing systems. Any kind of computing system or other apparatus adapted for carrying out the methods described herein is suited. A typical combination of hardware and software may be a general-purpose computing system with a program or other code that, when being loaded and executed, controls the computing system such that it carries out the methods described herein. Another typical implementation may comprise an application specific integrated circuit or chip.

Various implementations in accordance with the present disclosure may also be embedded in a computer program product, which comprises all the features enabling the implementation of the methods described herein, and which when loaded in a computer system is able to carry out these methods. Computer program in the present context means any expression, in any language, code or notation, of a set of instructions intended to cause a system having an information processing capability to perform a particular function either directly or after either or both of the following: a) conversion to another language, code or notation; b) reproduction in a different material form.

While the present disclosure has been described with reference to certain implementations, it will be understood by those skilled in the art that various changes may be made and equivalents may be substituted without departing from the scope of the present disclosure. For example, block and/or components of disclosed examples may be combined, divided, re-arranged, and/or otherwise modified. In addition, many modifications may be made to adapt a particular situation or material to the teachings of the present disclosure without departing from its scope. Therefore, it is intended that the present disclosure not be limited to the particular implementation disclosed, but that the present disclosure will include all implementations falling within the scope of the appended claims.

Certain embodiments of the invention are described in the following clauses:
Clause 1 A welding-type system, comprising:
   an mounting device configured for facilitating mounting of welding-type equipment onto a mounting platform, wherein:
      the mounting device is configured for securely engaging the mounting platform; and
      the mounting device is configured for engaging the welding-type equipment such that the welding-type equipment can be mounted onto or removed from the mounting platform;
   wherein the mounting device comprises:
      a locking component configured for locking the welding-type equipment in place once mounted;
      an engaging structure configured to engage a corresponding structure in the welding-type equipment; and
      one or more aligning structures configured for aligning the welding-type equipment during mounting and removing of the welding-type equipment.
Clause 2 The welding-type system according to clause 1, wherein the engaging structure comprises a tray-like bracket comprising a flat surface configured to engage a corresponding flat structure in the welding-type equipment.
Clause 3 The welding-type system according to clause 2, wherein the corresponding flat structure in the welding-type equipment comprises a flat base.
Clause 4 The welding-type system according to clause 3, wherein the flat base is a separate add-on component that is selectively attachable to the welding-type equipment.
Clause 5 The welding-type system according to clause 1, wherein the one or more aligning structures comprise at least one boss structure with an undercut], wherein the boss structure is configured for engaging a corresponding aligning feature disposed in the welding-type equipment or in a component that engages the welding-type equipment.
Clause 6 The welding-type system according to clause 5, wherein the at least one boss structure comprises a button-like structure.
Clause 7 The welding-type system according to clause 5, wherein the corresponding aligning feature comprises a slot.
Clause 8 The welding-type system according to clause 7, wherein the slot comprises a keyhole-shaped slot.
Clause 9 The welding-type system according to clause 1, wherein the one or more aligning structures comprise one or more tracking structures configured for facilitating track-like movement of the weld-type equipment during mounting and removing of the weld-type equipment.
Clause 10 The welding-type system according to clause 9, wherein the one or more tracking structures comprise boss-on-base trapping vertical extensions connected to a flat base of the mounting device.
Clause 11 The welding-type system according to clause 1, wherein the locking component comprises a retractable spring plunger.
Clause 12 The welding-type system according to clause 1, wherein the welding-type equipment comprises a locking receiving feature configured for engaging the locking component when the welding-type equipment is mounted.
Clause 13 The welding-type system according to clause 1, wherein the welding-type equipment comprises a welding-type wire drive and/or a welding-type wire feeder.
Clause 14 The welding-type system according to clause 1, wherein the welding-type equipment comprises a handling component configured for enabling handling the welding-type equipment during mounting and/or removing of the welding-type equipment.
Clause 15 The welding-type system accordingto clause 1, wherein the mounting platform comprises a robotic device configured for mounting and moving the welding-type equipment during welding operations.
Clause 16 The welding-type system according to clause 1, wherein the mounting platform comprises a cart.
Clause 17 The welding-type system according to clause 1, wherein the mounting platform comprises a different welding-type equipment.
Clause 18 The welding-type system according to clause 1, wherein the mounting device further comprises a mounting adapter configured for facilitating engaging the mounting platform.
Clause 19 The welding-type system according to clause 18, wherein the mounting adapter comprises a bracket adaptively configured for facilitating engaging the mounting platform based on a type and/or a shape of the mounting platform.
Clause 20 The welding-type system according to clause 1, wherein the mounting device further comprises a moving adapter configured for facilitating moving the mounting device in one or more directions while remaining securely engaged to the mounting platform.
Clause 21 The welding-type system according to clause 20, wherein the moving adapter comprises a swiveling or spinning mechanism configured for facilitating rotating of the mounting device while attached to the mounting platform.

## Claims

1. A welding-type system, comprising:
an mounting device configured for facilitating mounting of welding-type equipment onto a mounting platform, wherein:
the mounting device is configured for securely engaging the mounting platform; and
the mounting device is configured for engaging the welding-type equipment such that the welding-type equipment can be mounted onto or removed from the mounting platform;
wherein the mounting device comprises:
a locking component configured for locking the welding-type equipment in place once mounted;
an engaging structure configured to engage a corresponding structure in the welding-type equipment; and
one or more aligning structures configured for aligning the welding-type equipment during mounting and removing of the welding-type equipment.

2. The welding-type system according to claim 1, wherein the engaging structure comprises a tray-like bracket comprising a flat surface configured to engage a corresponding flat structure in the welding-type equipment.

3. The welding-type system according to claim 2, wherein the corresponding flat structure in the welding-type equipment comprises a flat base.

4. The welding-type system according to claim 3, wherein the flat base is a separate add-on component that is selectively attachable to the welding-type equipment.

5. The welding-type system according to claim 1, wherein the one or more aligning structures comprise at least one boss structure with an undercut], wherein the boss structure is configured for engaging a corresponding aligning feature disposed in the welding-type equipment or in a component that engages the welding-type equipment.

6. The welding-type system according to claim 5, wherein the at least one boss structure comprises a button-like structure.

7. The welding-type system according to claim 5, wherein the corresponding aligning feature comprises a slot.

8. The welding-type system according to claim 7, wherein the slot comprises a keyhole-shaped slot.

9. The welding-type system according to claim 1, wherein the one or more aligning structures comprise one or more tracking structures configured for facilitating track-like movement of the weld-type equipment during mounting and removing of the weld-type equipment, and optionally
wherein the one or more tracking structures comprise boss-on-base trapping vertical extensions connected to a flat base of the mounting device.

10. The welding-type system according to claim 1, wherein the locking component comprises a retractable spring plunger.

11. The welding-type system according to claim 1, wherein the welding-type equipment comprises a locking receiving feature configured for engaging the locking component when the welding-type equipment is mounted or
wherein the welding-type equipment comprises a welding-type wire drive and/or a welding-type wire feeder.

12. The welding-type system according to claim 1, wherein the welding-type equipment comprises a handling component configured for enabling handling the welding-type equipment during mounting and/or removing of the welding-type equipment or
wherein the mounting platform comprises a robotic device configured for mounting and moving the welding-type equipment during welding operations.

13. The welding-type system according to claim 1, wherein the mounting platform comprises a cart or
wherein the mounting platform comprises a different welding-type equipment.

14. The welding-type system according to claim 1, wherein the mounting device further comprises a mounting adapter configured for facilitating engaging the mounting platform and optionally
wherein the mounting adapter comprises a bracket adaptively configured for facilitating engaging the mounting platform based on a type and/or a shape of the mounting platform.

15. The welding-type system according to claim 1, wherein the mounting device further comprises a moving adapter configured for facilitating moving the mounting device in one or more directions while remaining securely engaged to the mounting platform, and optionally
wherein the moving adapter comprises a swiveling or spinning mechanism configured for facilitating rotating of the mounting device while attached to the mounting platform.
